(19) Europäisches Patentamt
European Patent Office
Office européen des brevets

(11) **EP 4 590 020 A1**

(12) **EUROPEAN PATENT APPLICATION**
published in accordance with Art. 153(4) EPC

(43) Date of publication:
**23.07.2025 Bulletin 2025/30**

(21) Application number: **23902119.9**

(22) Date of filing: **25.07.2023**

(51) International Patent Classification (IPC):
**H04W 28/08** (2023.01)

(52) Cooperative Patent Classification (CPC):
**H04W 24/06; H04W 28/08**

(86) International application number:
**PCT/CN2023/109115**

(87) International publication number:
**WO 2024/124909 (20.06.2024 Gazette 2024/25)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **13.12.2022 CN 202211595595**

(71) Applicant: **ZTE CORPORATION
Shenzhen, Guangdong 518057 (CN)**

(72) Inventors:
• **SUN, Hongfeng**
  **Shenzhen, Guangdong 518057 (CN)**
• **HE, Baoguo**
  **Shenzhen, Guangdong 518057 (CN)**
• **JIN, Xiao**
  **Shenzhen, Guangdong 518057 (CN)**

(74) Representative: **Ziebig Hengelhaupt Intellectual
Property Attorneys
Patentanwaltskanzlei PartGmbB
Leipziger Straße 49
10117 Berlin (DE)**

(54) **COMMUNICATION METHOD, ELECTRONIC DEVICE, AND STORAGE MEDIUM**

(57) The present application belongs to the technical field of communications. Disclosed are a communication method, an electronic device, and a storage medium. The method comprises: sending target startup information to a second computing-power unit, wherein the target startup information carries features of a target task; receiving computing-power measurement information, which is reported by the second computing-power unit, wherein the computing-power measurement information is used for representing an available computing power, which is allocated by the second computing-power unit to the target task; and when the available computing power matches the features of the target task, sending the target task to the second computing-power unit.

```
                                              S101
┌─────────────────────────────────────────────┐
│ Send target startup information to a second   │
│ computing-power unit, the target startup      │
│ information carrying features of a target task │
└─────────────────────────────────────────────┘
                      │
                      ▼                       S102
┌─────────────────────────────────────────────┐
│ Receive computing-power measurement           │
│ information reported by the second            │
│ computing-power unit, the computing-power     │
│ measurement information beings used for       │
│ representing available computing power        │
│ allocated by the second computing-power unit  │
│ to the target task                            │
└─────────────────────────────────────────────┘
                      │
                      ▼                       S103
┌─────────────────────────────────────────────┐
│ Send, when the available computing power      │
│ matches the features of the target task, the  │
│ target task to the second computing-power unit │
└─────────────────────────────────────────────┘
```

FIG. 1

EP 4 590 020 A1

## Description

CROSS-REFERENCE TO RELATED APPLICATIONS

The present application claims priority to the Chinese patent application No. 202211595595.0, filed to the Chinese Patent Office on December 13, 2022 and entitled "COMMUNICATION METHOD, ELECTRONIC DEVICE, AND STORAGE MEDIUM", which is incorporated herein by reference in its entirety.

TECHNICAL FIELD

The present application belongs to the technical field of communications, and particularly relates to a communication method, an electronic device, and a storage medium.

BACKGROUND

With the development of wireless communication technology and the arrival of the 5th-generation mobile communication technology (5G) era, which is characterized by high speed, high bandwidth and low delay, computing and management capabilities of a radio access network (RAN), which is a medium for a user terminal to access a core network, are becoming increasingly important. The core of artificial intelligence (AI) technology is realizing control intelligence with the use of AI models constructed with data, algorithms and codes.

In the relevant RAN, AI-based training and inference engines are usually centrally arranged on a single-point computing power board of a base station, but application scenarios of the RAN are rich, the computing power under a single station is fixed, and the problem of insufficient single-point computing power may be caused when a plurality of application scenarios are supported; moreover, data acquisition and AI application may be located on different single boards of the base station, so data from other single boards needs to be transmitted to a fixed location before AI training and inference, which causes the problems of data transmission overheads, feedback delay and the like.

SUMMARY

Embodiments of the present application aim to provide a communication method and apparatus, an electronic device, and a storage medium. The problems of insufficient computing power of an RAN, a large training and inference delay and poor real-time performance in the case of a large amount of business data and rich application scenarios can be solved.

In order to solve the above-mentioned technical problems, the present application is implemented as follows.

In a first aspect, an embodiment of the present application provides a communication method. The method is performed by a first computing-power unit, and includes: sending target startup information to a second computing-power unit, the target startup information carrying features of a target task; receiving computing-power measurement information reported by the second computing-power unit, the computing-power measurement information being used for representing available computing power allocated by the second computing-power unit to the target task; and sending, when the available computing power matches the features of the target task, the target task to the second computing-power unit.

In a second aspect, an embodiment of the present application provides a communication method. The method is performed by a second computing-power unit, and includes: receiving target startup information sent by a first computing-power unit, the target startup information carrying features of a target task; allocating available computing power to the target task on the basis of the features of the target task; and sending computing-power measurement information to the first computing-power unit, the computing-power measurement information being used for representing the available computing power.

In a third aspect, an embodiment of the present application provides a communication method. The method is performed by a third computing-power unit, and includes: receiving a processing result of a target task sent by a first computing-power unit; evaluating the processing result of the target task to obtain a target evaluation result; and feeding the target evaluation result back to the first computing-power unit.

In a fourth aspect, an embodiment of the present application provides a communication apparatus. The apparatus includes: a first sending module configured to send target startup information to a second computing-power unit, the target startup information carrying features of a target task; a first receiving module configured to receive computing-power measurement information reported by the second computing-power unit, the computing-power measurement information being used for representing available computing power allocated by the second computing-power unit to the target task; and a second sending module configured to send, when the available computing power matches the features of the target task, the target task to the second computing-power unit.

In a fifth aspect, an embodiment of the present application provides a communication apparatus. The apparatus includes: a second receiving module configured to receive target startup information sent by a first computing-power unit, the target startup information carrying features of a target task; an allocation module configured to allocate available computing power to the target task on the basis of the features of the target task; and a third sending module configured to send computing-power measurement information to the first computing-power unit, the computing-power measurement information being used for representing the available computing power.

In a sixth aspect, an embodiment of the present application provides a communication apparatus. The apparatus includes: a third receiving module configured to receive a processing result of a target task sent by a first computing-power unit; an evaluation module configured to evaluate the processing result of the target task to obtain a target evaluation result; and a feedback module configured to feed the target evaluation result back to the first computing-power unit.

In a seventh aspect, an embodiment of the present application provides an electronic device. The electronic device includes a processor and a memory, the memory storing a program or instructions able to run on the processor, and the program or instructions, when executed by the processor, implementing the steps of the communication method as described in the first aspect or the second aspect or the third aspect.

In an eighth aspect, an embodiment of the present application provides a readable storage medium, the readable storage medium storing a program or instructions, and the program or instructions, when executed by a processor, implementing the steps of the communication method as described in the first aspect or the second aspect or the third aspect.

In a ninth aspect, an embodiment of the present application provides a chip, the chip including a processor and a communication interface, the communication interface being coupled to the processor, and the processor being configured to run a program or instructions to implement the steps of the communication method as described in the first aspect or the second aspect or the third aspect.

In a tenth aspect, an embodiment of the present application provides a computer program product, the computer program product being stored in a storage medium, and the program product being executed by at least one processor to implement the steps of the communication method as described in the first aspect or the second aspect or the third aspect.

BRIEF DESCRIPTION OF DRAWING(S)

In order to more clearly describe the technical solutions of the embodiments of the present application or in the prior art, drawings that are to be referred for description of the embodiments or the prior art will be briefly described hereinafter. Apparently, the drawings described hereinafter merely illustrate some embodiments of the present application, and a person of ordinary skill in the art may also derive other drawings based on the drawings described herein without any creative effort.

FIG. 1 is a schematic flow diagram of a communication method provided by an embodiment of the present application.

FIG. 2 is a schematic structural diagram of an AI distributed framework provided by an embodiment of the present application.

FIG. 3 is a schematic structural diagram of an AI training and inference engine provided by an embodiment of the present application.

FIG. 4 is a schematic structural diagram of a distributed framework within a base station provided by an embodiment of the present application.

FIG. 5 is a schematic structural diagram of a distributed framework between base stations provided by an embodiment of the present application.

FIG. 6 is a schematic structural diagram of a distributed framework between a base station and an edge computing device provided by an embodiment of the present application.

FIG. 7 is a general architecture diagram of a 5G radio access network (RAN) provided by an embodiment of the present application.

FIG. 8 is a schematic flow diagram of a communication method provided by an embodiment of the present application.

FIG. 9 is a schematic flow diagram of a communication method provided by an embodiment of the present application.

FIG. 10 is a schematic flow diagram of a communication method provided by an embodiment of the present application.

FIG. 11 is a schematic flow diagram of a communication method provided by an embodiment of the present application.

FIG. 12 is a schematic structural diagram of a communication apparatus provided by an embodiment of the present application.

FIG. 13 is a schematic structural diagram of a communication apparatus provided by an embodiment of the present application.

FIG. 14 is a schematic structural diagram of a communication apparatus provided by an embodiment of the present application.

FIG. 15 is a schematic structural diagram of hardware of an electronic device provided by an embodiment of the present application.

DETAILED DESCRIPTION

The technical solutions of the embodiments of the present application will be clearly described below with reference to the accompanying drawings of the embodiments of the present application. Apparently, the embodiments described are a part of the embodiments of the present application, rather than all of the embodiments. Based on the embodiments of the present application, all other embodiments obtained by a person of ordinary skill in the art shall fall within the scope of protection of the present application.

The terms "first", "second", and the like in the description and the claims of the present application are used for distinguishing between similar objects and not necessarily for describing a particular sequential or chronological order. It should be understood that data so used may be interchangeable, where appropriate, so that embodiments of the present application can be carried out in an order other than those illustrated or described herein, and that objects distinguished by "first," "second," etc., are generally of one kind and the number of objects is not limited, for example, the first object may be one or more than one. In addition, "and/or" in the specification and the claims indicates at least one of connected objects, and the character "/" generally indicates an "or" relationship between associated objects.

A communication method and apparatus, an electronic device, and a storage medium provided by embodiments of the present application are described in detail below in connection with the accompanying drawings by means of specific embodiments and application scenarios thereof.

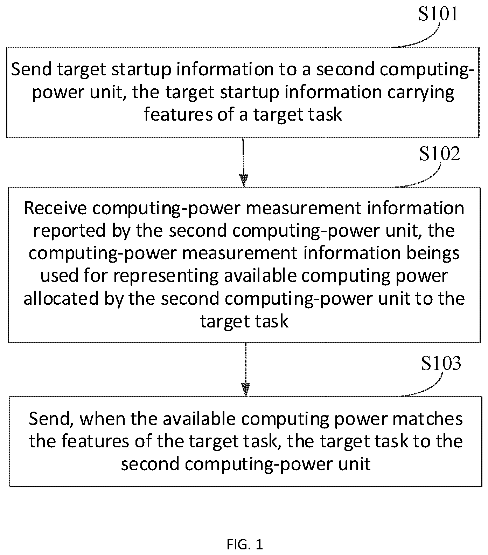

FIG. 1 illustrates a schematic flow diagram of a communication method provided by an embodiment of the present application. The method may be performed by an electronic device or a first computing-power unit on the electronic device. The electronic device may include: a server or a terminal device. In other words, the method may be executed by software or hardware installed on the electronic device, and as shown in FIG. 1, the method includes the following steps.

S101: target startup information is sent to a second computing-power unit.

The target startup information carries features of a target task.

AI engines of a wireless access network (RAN) are usually centrally deployed on a single-point computing power board of a base station, and the computing power of the base station is fixed under this deployment method; due to different scenarios or scenarios being in different protocol layers, data acquisition and AI application may be located on different single boards of the base station, and due to the use of centralized deployment, data from other single boards needs to be transmitted to a fixed location before AI training and inference, which causes the problems of data transmission overheads and feedback delay. In addition, the application scenarios of the wireless access network are rich, the computing power is fixed under the single station, but the problem of insufficient single-point computing power may be caused when a large number of application scenarios are supported.

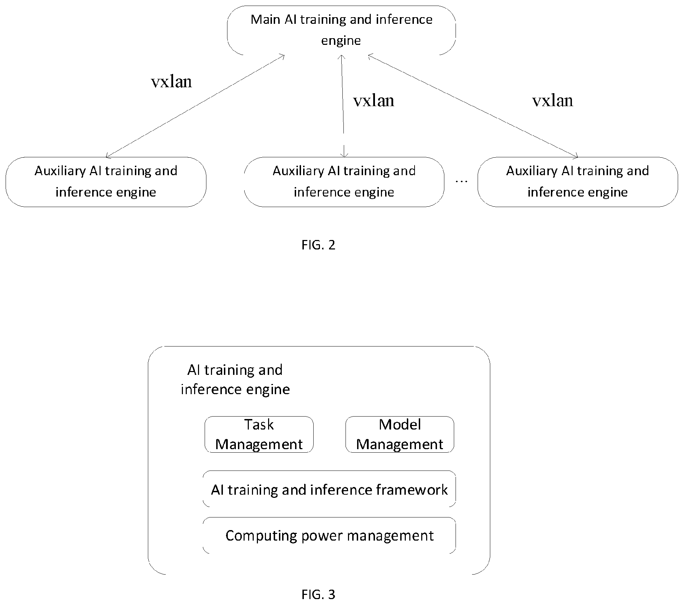

The AI engine is a framework that may support users to develop machine learning and deep learning model training. The overall architecture of an artificial intelligence (AI) distributed framework is shown as a master-slave method in FIG. 2: a main AI training and inference engine and a plurality of auxiliary AI training and inference engines collaborate to complete training and inference related tasks, and the main AI training and inference engine and the plurality of auxiliary AI training and inference engines communicate with each other through a virtual eXtensible local area network (VXLAN). As shown in FIG. 3, the main/auxiliary AI training and inference engine includes computing power management, task management, model management, and an AI training and inference framework. Computing power management is responsible for computing-power measurement, evaluating the computing power of the AI engine, and maintaining computing power status information; model management maintains AI model addition, updating, deletion management, and model loading; task management is responsible for managing and allocating AI training tasks and inference tasks; and the AI training and inference framework is responsible for executing model training and inference.

In this step, the main AI training engine (i.e., the first computing-power unit) sends the target startup information to the auxiliary AI training engines (i.e., the second computing-power unit), and the target startup information carries the features of the target task to notify the second computing-power unit to report available computing power that may be allocated to the target task.

S102: computing-power measurement information reported by the second computing-power unit is received.

The computing-power measurement information is used for representing the available computing power allocated to the target task by the second computing-power unit.

In this step, the computing-power measurement information reported by computing power management modules of the auxiliary AI training engines to the main AI training engine, and the computing-power measurement information is used for representing the available computing power allocated by the auxiliary AI training engines to the target task.

Specifically, for example, computing-power measurement may be characterized as the following function:

$$f=f(a0\_type, a1\_flops, a2\_load, a3\_time)$$

where a0_type denotes the type of computing power hardware, such as a central processing unit (CPU), a field-programmable gate array (FPGA), and a graphics processing unit (GPU); a1_flops denotes the computing power of the hardware; a2_load denotes a load condition of the computing power, including the maximum use computing power, the minimum use computing power, the average use computing power, etc.; and a3_time denotes time information of the use of the computing power.

S103: when the available computing power matches the features of the target task, the target task is sent to the second computing-power unit.

The main AI training and inference engine receives the computing-power measurement information reported by each auxiliary AI training and inference engine, and a task management module carries out the matching of features of a training/inference task with the computing power. The features of the AI training and inference task cover computing power resources required for training and inference, a training\inference data source, the data volume, and requirements of the task for real-time performance; and matching rules satisfy the fact that an engine that performs the training/inference task uses local data for training and inference to ensure real-time performance of training/inference, and meanwhile, auxiliary training engines with high loads may not be assigned with training/inference tasks. Finally, the main AI training and inference engine sends the training/inference task to the auxiliary AI training and inference engines for execution according to a task matching result of the task management module.

According to the communication apparatus provided by the embodiment of the present application, the target startup information is sent to the second computing-power unit, the target startup information carrying the features of the target task; the computing-power measurement information reported by the second computing-power unit is received, the computing-power measurement information being used for representing the available computing power allocated by the second computing-power unit to the target task; and when the available computing power matches the features of the target task, the target task is sent to the second computing-power unit, so that the problems of insufficient computing power of the RAN, a large training and inference delay, and poor real-time performance in the case of a large amount of business data and rich application scenarios can be solved.

In one implementation, the first computing-power unit includes a first main control board of a first base station, and the second computing-power unit includes at least one of at least one baseband board of the first base station, at least one baseband board of a second base station, and at least one edge computing device connected to the first base station.

In one implementation, in the event that the second computing-power unit includes at least one baseband board of the second base station, the first base station establishes an inter-base station connection with the second base station via an Xn port; and in the event that the second computing-power unit includes at least one baseband board of the first base station, the first computing-power unit is connected to the second computing-power unit via a virtual extensible local area network (VXLAN).

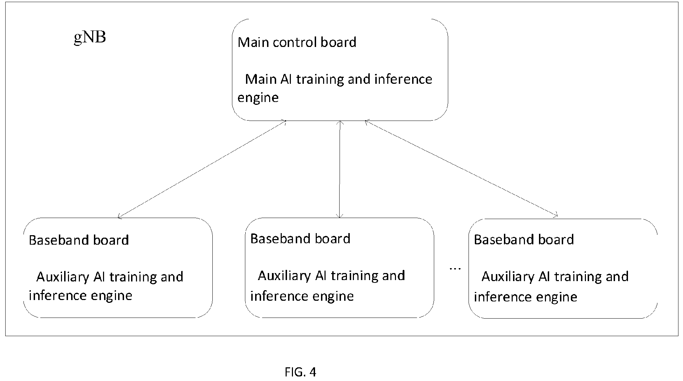

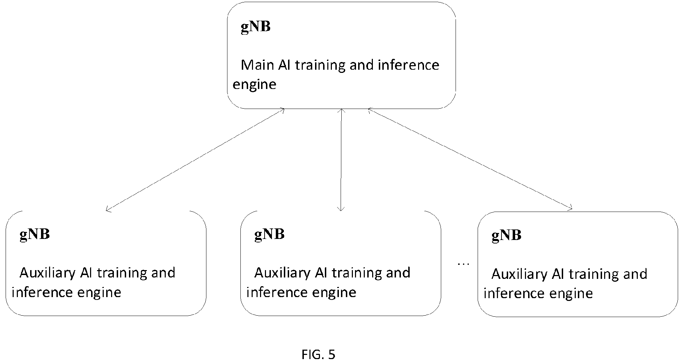

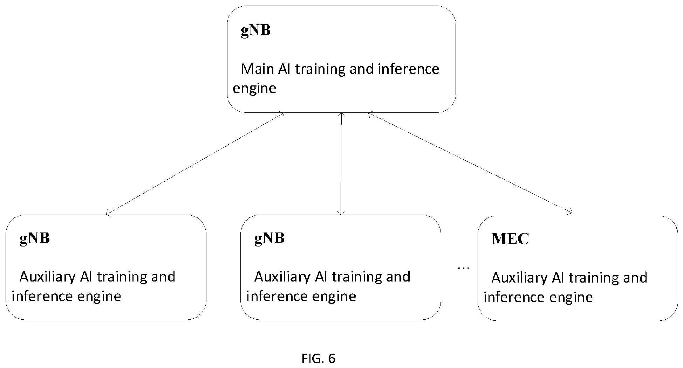

As shown in FIG. 4 to FIG. 6, in the embodiment of the present application, the artificial intelligence (AI) distributed framework is deployed in three ways: 1) distributed deployment within a base station (FIG. 4); 2) distributed deployment between base stations (FIG. 5); and 3) distributed deployment between a base station and an edge computing device (FIG. 6).

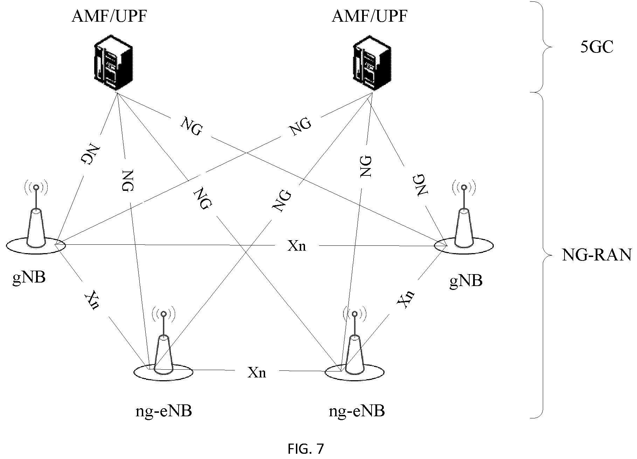

FIG. 7 illustrates an overall architecture diagram of a radio access network (RAN) for 5th generation mobile communication technology (5G): a next generation node B (gNB)) provides 5G new radio (NR) user-plane and control-plane protocols; and a next generation evolved node B (ng-eNB) provides evolved universal mobile telecommunications system (UMTS) terrestrial radio access network (E-UTRA) user-plane and control-plane protocols. The gNB and the ng-eNB are connected through an Xn port. The gNB and the ng-eNB are connected to a 5G core (5GC) through NG ports. The 5GC contains an authentication management function (AMF) and a user plane function (UPF), where the AMF and the UPF are connected to the gNB and the ng-eNB via an NG-C port and an NG-U port, respectively. The artificial intelligence (AI) distributed framework in the embodiment of the present application may be deployed in a distributed manner either within the gNB or on the gNB and the ng-eNB, and may ultimately be applied to intelligence of the 5G radio access network.

In one implementation, after sending the target task to the second computing-power unit, the method further includes: receiving a processing result of the target task sent by the second computing-power unit.

In one implementation, after receiving the processing result of the target task sent by the second computing-power unit, the method further includes: sending the processing result of the target task to a third computing-power unit; receiving a target evaluation result fed back by the third computing-power unit, the target evaluation result being obtained by evaluating the processing result of the target task; and updating the processing result of the target task on the basis of the target evaluation result.

It is to be noted that in the embodiment of the present application, the target task includes: a task of training a model; the processing result of the target task includes: a model obtained by training; and the target evaluation result includes: an evaluation result obtained by evaluating the model.

A person skilled in the art would have been conceivable of carrying out AI training of the RAN through cloudization to solve the problem of limited computing power of the RAN, that is, an AI training task of a base station is obtained through a cloud training system, and then a training result is returned to the base station, so that AI training of the wireless access network is no longer limited by the computing power of the base station. However, data transmission is required between the base station and the cloud, mass data has high requirements on the transfer bandwidth, moreover, a large data transmission delay may be caused, so that the real-time performance of online AI training and inference is poor, and expected results cannot be achieved when dealing with task scenarios with high requirements on real-time performance.

By deploying the artificial intelligence distributed framework within or between radio base stations according to the embodiments of the present application, computing power resources in a deployment region may be collected and measured, available computing power resources match the AI training and inference task to complete the AI inference and training task in a distributed manner, and at the same time, a training model may be shared between base stations in a cross-station manner. On the one hand, the problem that some models cannot be trained online due to high business loads and limited idle computing power at some stations can be solved, and on the other hand, the problems that uploading a large amount of data to the cloud for training has extremely high requirements on transmission delay and transmission bandwidth, and online inference has poor real-time performance are solved; moreover, as the data is not out of the base station, the security is higher, and the processing capability of the radio access network is improved.

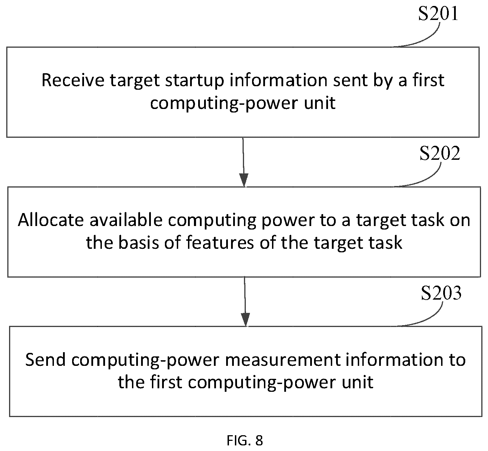

FIG. 8 illustrates a schematic flow diagram of a communication method provided by an embodiment of the present application. The method may be executed by an electronic device or a second computing-power unit on the electronic device. The electronic device may include: a server or a terminal device. In other words, the method may be executed by software or hardware installed on the electronic device, and as shown in FIG. 8, the method includes the following steps.

S201: target startup information sent by a first computing-power unit is received.

The target startup information carries features of a target task.

In this step, computing power management modules of auxiliary AI training engines (i.e. the second computing-power unit) deployed on different baseband boards report computing-power measurement information of the baseband boards to the main AI training and inference engine (i.e. the first computing-power unit).

S202: available computing power is allocated to the target task on the basis of the features of the target task.

The computing power management module of the auxiliary AI training engine measures local available computing power by calculation on the basis of the features of the target task.

S203: computing-power measurement information is sent to the first computing-power unit, the computing-power measurement information being used for representing the available computing power.

The auxiliary AI training engine reports the available computing power to the main AI training and inference engine.

According to the communication method provided by the embodiment of the present application, the target startup information sent by the first computing-power unit is received, the target startup information carrying the features of the target task; the available computing power is allocated to the target task on the basis of the features of the target task; and the computing-power measurement information is sent to the first computing-power unit, the computing-power measurement information being used for representing the available computing power, so that the problems of insufficient computing power of the RAN, a large training and inference delay, and poor real-time performance in the case of a large amount of business data and rich application scenarios can be solved.

In one implementation, after sending the computing-power measurement information to the first computing-power unit, the method further includes: receiving the target task, the target task being sent by the first computing-power unit in the event that the available computing power matches the features of the target task.

In one implementation, after receiving the target task, the method further includes: executing the target task to obtain a processing result of the target task; and sending the processing result of the target task to the first computing-power unit.

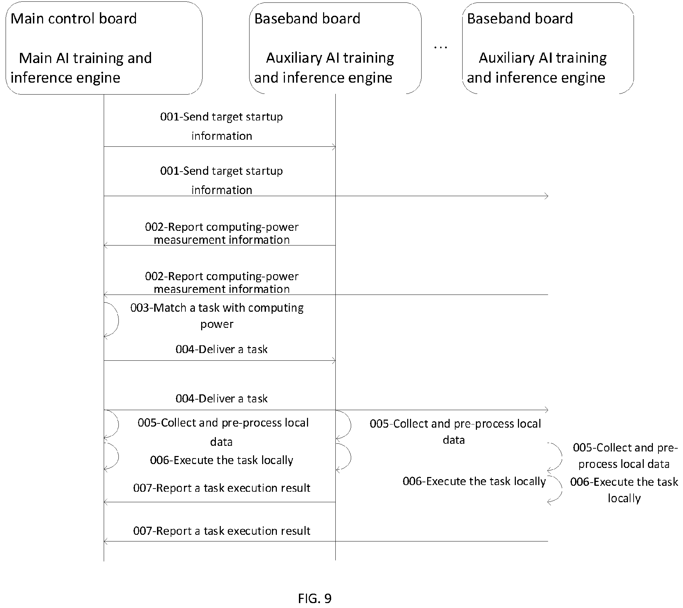

FIG. 9 is a schematic flow diagram of a communication method provided by an embodiment of the present application. The method includes the following steps:

S001: target startup information is sent.

A main AI training and inference engine sends the target startup information to auxiliary AI training engines respectively.

S002: computing-power measurement information is reported.

Computing power management modules of auxiliary AI training engines deployed on different baseband boards report the computing-power measurement information of the baseband boards to the main AI training and inference engine.

S003: a task is matched with computing power.

The main AI training and inference engine receives the computing-power measurement information reported by each auxiliary AI training and inference engine, and a task management module carries out matching of features of a training/inference task with computing power.

S004: the task is delivered.

The main AI training and inference engine sends the training/inference task to the auxiliary AI training and inference engines for execution according to a task matching result of the task management module.

S005: local data is acquired and pre-processed.

A local AI training and inference engine receives the task, starts data required by matching the training/inference task, and starts acquisition and pre-processing of local data.

S006: the task is executed locally.

The local AI training and inference engine receives the task and uses the local pre-processed data to carry out a local training/inference task. A trained model/inference result may also be locally stored through a local model management module.

S007: a task execution result is reported.

After the local AI training and inference engine completes training and inference, the model/ inference result is also synchronously sent to the model management module of the main AI training and inference engine for management. The managed model is updated by the model management module according to a model management strategy.

The above steps illustrate the communication method provided by the embodiment of the present application from the perspective of the interaction between the main training engine and secondary training engines. The specific steps can be described in the same part of the previous embodiment, and can achieve the same technical effect, which are not repeated for the sake of brevity.

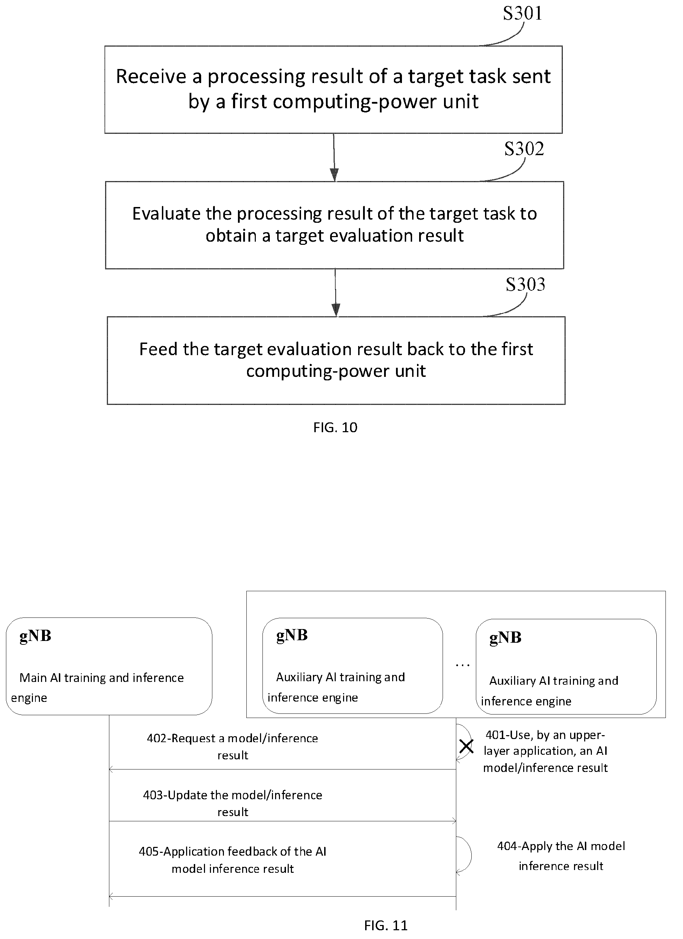

FIG. 10 illustrates a schematic flow diagram of a communication method provided by an embodiment of the present application. The method may be executed by an electronic device or a third computing-power unit on the electronic device. The electronic device may include: a server or a terminal device. In other words, the method may be executed by software or hardware installed on the electronic device, and as shown in FIG. 10, the method includes the following steps.

S301: a processing result of a target task sent by a first computing-power unit is received.

After the local AI training and inference engine completes training and inference, the model/ inference result is synchronously sent to the model management module of the main AI training and inference engine for management. In a base station (the third computing-power unit) deployed with auxiliary AI training and inference engines, the upper-layer application needs to use the corresponding AI model/inference result; however, due to the high load and less idle computing power of the station, the station did not carry out corresponding AI model training/inference before, so the upper-layer application of the station may not match the corresponding AI model/inference result. The base station deployed with the auxiliary AI training and inference engines requests a base station of the main AI training and inference engine for the corresponding AI model/inference result.

The base station of the main AI training and inference engine sends the corresponding AI model/inference result to the base stations of the auxiliary AI training and inference engines.

S302: the processing result of the target task is evaluated to obtain a target evaluation result.

The upper-layer application of the base station of the auxiliary AI training and inference engine calls the AI model/inference result to complete the upper-layer business use. The auxiliary AI training and inference engine evaluates an effect of calling the AI model/inference result by the upper-layer application.

S303: the target evaluation result is fed back to the first computing-power unit.

The auxiliary AI training and inference engine feeds the corresponding evaluation result to the main AI training and inference engine, so that the main AI training and inference engine decides whether to carry out the next round of model training/model inference task according to an effect evaluation strategy.

According to the communication method provided by the embodiment of the present application, the processing result of the target task sent by the first computing-power unit is received; the processing result of the target task sent is evaluated to obtain the target evaluation result; and the target evaluation result is fed back to the first computing-power unit, so that the problems of insufficient computing power of the RAN, a large training and inference delay, and poor real-time performance in the case of a large amount of business data and rich application scenarios can be solved.

In addition, since base stations are deployed in a net shape, different base stations have the same application scenario, different training tasks are deployed on different base stations, respectively, and the base stations can share the training result, that is, full-scene AI training can be supported, so that the effect of enhancing the single-point computing power is achieved, and the processing capacity of the radio access network is improved.

FIG. 11 is a schematic flow diagram of a communication method provided by an embodiment of the present application. The method includes the following steps:

S401: an upper-layer application uses an AI model/inference result.

In a base station (the third computing-power unit) deployed with auxiliary AI training and inference engines, the upper-layer application needs to use the corresponding AI model/inference result; however, due to the high load and less idle computing power of the station, the station did not carry out corresponding AI model training/inference before, so the upper-layer application of the station may not match the corresponding AI model/inference result.

S402: a model/inference result is requested.

The base station deployed with the auxiliary AI training and inference engines requests the base station of a main AI training and inference engine for the corresponding AI model/inference result.

S403: the model/inference result is updated.

The base station of the main AI training and inference engine sends the corresponding AI model/inference result to the base stations of the auxiliary AI training and inference engines.

S404: the AI model/inference result is applied.

The upper-layer application of the base station of the auxiliary AI training and inference engines calls the AI model/inference result to complete the upper-layer business use.

S405: application of the AI model/inference result is fed back.

The auxiliary AI training and inference engine evaluates an effect of calling the AI model/inference result by the upper-layer application. The auxiliary AI training and inference engine feeds the corresponding evaluation result to the main AI training and inference engine, so that the main AI training and inference engine decides whether to carry out the next round of model training/model inference task according to an effect evaluation strategy.

The above steps are mainly a process of sharing the AI model/inference result between base stations based on a distributed framework. The specific deployment principle is as follows: a base station with relatively low loads and more idle computing power is deployed with the main AI training and inference engine; and a base station with relatively high loads and less idle computing power is deployed with an auxiliary AI training and inference engine. The trained model/inference results are all managed in the main AI training and inference engine, and the base station deployed with the auxiliary AI training and inference engine completes the upper-layer business application by directly using the AI model/inference result managed by the main AI training and inference engine.

In addition, the distributed deployment mode and communication method between a base station and an edge computing device may be referred to the relevant description of the above embodiment, and may achieve the same technical effect, which will not be repeated for the sake of brevity.

It should be noted that, for the communication method provided by the embodiment of the present application, an executing subject may be a communication apparatus or a control module in the communication apparatus for executing the communication method. The communication apparatus according to the embodiment of the present application is illustrated by taking a method in which the communication apparatus performs communication as an example.

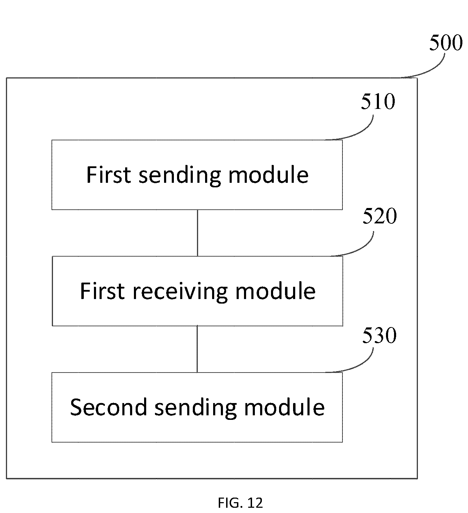

FIG. 12 is a schematic structural diagram of a communication apparatus provided by an embodiment of the present application. As shown in FIG. 12, the communication apparatus 500 includes: a first sending module 510, a first receiving module 520 and a second sending module 530.

The first sending module 510 is configured to send target startup information to a second computing-power unit, the target startup information carrying features of a target task. The first receiving module 520 is configured to receive computing-power measurement information reported by the second computing-power unit, the computing-power measurement information being used for representing available computing power allocated by the second computing-power unit to the target task. The second sending module 530 is configured to send, when the available computing power matches the features of the target task, the target task to the second computing-power unit.

According to the communication apparatus provided by the embodiment of the present application, the first sending module is configured to send the target startup information to the second computing-power unit, the target startup information carrying the features of the target task; the first receiving module is configured to receive the computing-power measurement information reported by the second computing-power unit, the computing-power measurement information being used for representing the available computing power allocated by the second computing-power unit to the target task; and the second sending module is configured to send, when the available computing power matches the features of the target task, the target task to the second computing-power unit, so that the problems of insufficient computing power of the RAN, a large training and inference delay, and poor real-time performance in the case of a large amount of business data and rich application scenarios can be solved.

In one implementation, the first receiving module 520 is further configured to: receive a processing result of the target task sent by the second computing-power unit.

In one implementation, the apparatus 500 further includes: a third sending module configured to send the processing result of the target task to a third computing-power unit; and the first receiving module 520 is further configured to: receive a target evaluation result fed back by the third computing-power unit, the target evaluation result being obtained by evaluating the processing result of the target task. The apparatus 500 further includes: an update module configured to update the processing result of the target task on the basis of the target evaluation result.

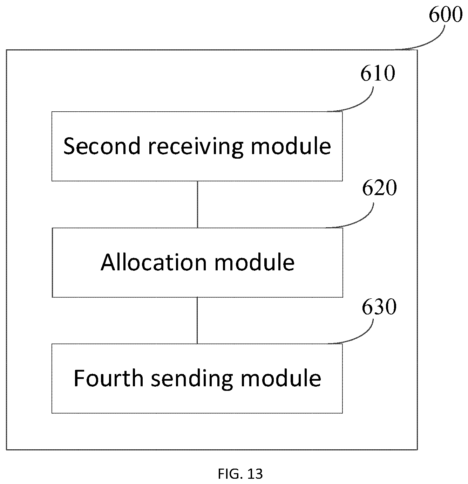

FIG. 13 is a schematic structural diagram of a communication apparatus provided by an embodiment of the present application. As shown in FIG. 13, the communication apparatus 600 includes: a second receiving module 610, an allocation module 620 and a fourth sending module 630.

The second receiving module 610 is configured to receive target startup information sent by a first computing-power unit, the target startup information carrying features of a target task. The allocation module 620 is configured to allocate available computing power to the target task on the basis of the features of the target task. The fourth sending module 630 is configured to send computing-power measurement information to the first computing-power unit, the computing-power measurement information being used for representing the available computing power.

According to the communication apparatus provided by the embodiment of the present application, the second receiving module is configured to receive the target startup information sent by the first computing-power unit, the target startup information carrying the features of the target task; the allocation module is configured to allocate the available computing power to the target task on the basis of the features of the target task;

and the fourth sending module is configured to send the computing-power measurement information to the first computing-power unit, the computing-power measurement information being used for representing the available computing power, so that the problems of insufficient computing power of the RAN, a large training and inference delay, and poor real-time performance in the case of a large amount of business data and rich application scenarios can be solved.

In one implementation, the second receiving module 610 is further configured to: receive the target task, the target task being sent by the first computing-power unit in the event that the available computing power matches the features of the target task.

In one implementation, the apparatus 600 further includes: an execution module configured to execute the target task to obtain a processing result of the target task. The fourth sending module 630 is further configured to: send the processing result of the target task to the first computing-power unit.

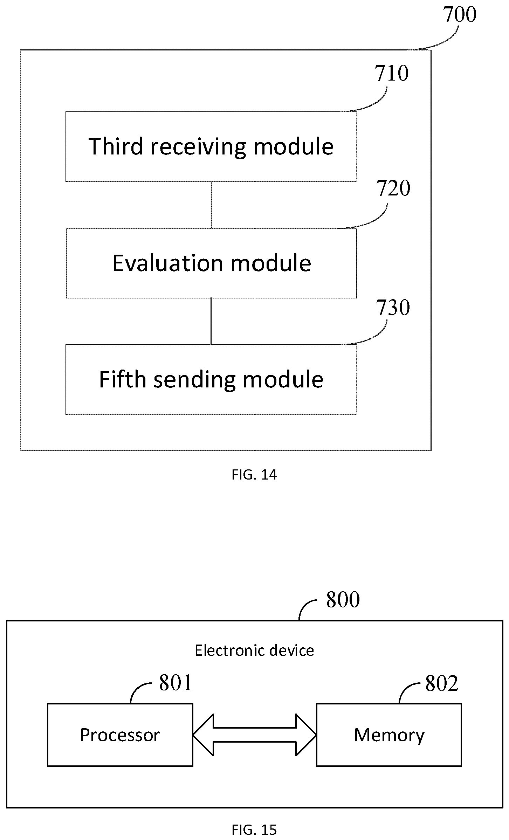

FIG. 14 is a schematic structural diagram of a communication apparatus provided by an embodiment of the present application. As shown in FIG. 14, the communication apparatus 700 includes: a third receiving module 710, an evaluation module 720 and a fifth sending module 730.

The third receiving module 710 is configured to receive a processing result of a target task sent by a first computing-power unit. The evaluation module 720 is configured to evaluate the processing result of the target task to obtain a target evaluation result. The fifth sending module 730 is configured to feed the target evaluation result back to the first computing-power unit.

In one implementation, the first computing-power unit includes a first main control board of a first base station, and the second computing-power unit includes at least one of at least one baseband board of the first base station, at least one baseband board of a second base station, and at least one edge computing device connected to the first base station.

In one implementation, in the event that the second computing-power unit includes at least one baseband board of the second base station, the first base station establishes an inter-base station connection with the second base station via an Xn port; and in the event that the second computing-power unit includes at least one baseband board of the first base station, the first computing-power unit is connected to the second computing-power unit via a virtual extensible local area network (VXLAN).

In one implementation, the third computing-power unit includes at least one of at least one baseband board of the first base station, at least one baseband board of the second base station, and at least one edge computing device connected to the first base station; and the third computing-power unit is not the same computing-power unit as the second computing-power unit.

In one implementation, the target task includes:

a task of training a model; the processing result of the target task includes: a model obtained by training; and the target evaluation result includes: an evaluation result obtained by evaluating the model.

The communication apparatus provided by the embodiment of the present application can implement the various processes realized by the communication method embodiments described in at least one of the embodiments of FIG. 1 to FIG. 11, and achieve the same technical effect, which will not be repeated herein for the sake of brevity.

The communication apparatus in the embodiments of the present application may be an apparatus, and may also be a component in a terminal device, an integrated circuit, or a chip. The apparatus may be a mobile electronic device or a non-mobile electronic device. Exemplarily, the mobile electronic device may be a cellular phone, a tablet computer, a laptop computer, a handheld computer, an in-vehicle electronic device, a wearable device, an ultra-mobile personal computer (UMPC), a netbook, or a personal digital assistant (PDA), etc., and the non-mobile electronic device may be a server, a network attached storage (NAS), a personal computer (PC), a television (TV), a teller machine or a kiosk, etc., which is not specifically limited in the embodiments of the present application.

The communication apparatus in the embodiment of the present application may be an apparatus having an operating system. The operating system may be an Android operating system, an ios operating system, or other possible operating systems, which is not specifically limited in the embodiment of the present application.

Optionally, as shown in FIG. 15, an embodiment of the present application further provides an electronic device 800. The electronic device includes a processor 801, a memory 802, and programs or instructions stored on the memory 802 and able to run on the processor 801. The programs or instructions, when executed by the processor 801, implement the communication method according to at least one of the embodiments of FIG. 1 to FIG. 11. It should be noted that the electronic device in the embodiment of the present application includes: a server, a terminal device, or a device other than the terminal device.

The above structure of the electronic device does not constitute a limitation of the electronic device, and the electronic device may include more or fewer components than illustrated, or a combination of certain components, or a different arrangement of components, for example, an input unit, which may include a graphics processing unit (GPU) and a microphone, and a display unit, which may configure a display panel in the form of a liquid crystal display, an organic light-emitting diode and the like A user input unit includes at least one of a touch panel and other input devices. The touch panel is also referred to as a touch screen. The other input devices may include, but are not limited to, a physical keyboard, function keys (such as volume control buttons and switch buttons), a trackball, a mouse, and an operation lever, which is not repeated herein.

The memory may be configured to store software programs and various data. The memory may mainly include a first storage region for storing programs or instructions and a second storage region for storing data. The first storage region may store an operating system, an application program or instructions required for at least one function (e.g., a sound playback function and an image playback function), and the like. Further, the memory may include a volatile memory or a non-volatile memory, or, the memory may include both the volatile and the non-volatile memory. The non-volatile memory may be a read-only memory (ROM), a programmable read-only memory (PROM), an erasable programmable read-only memory (EPROM), an electrically erasable programmable read-only memory (EEPROM), or a flash memory. The volatile memory may be a random access memory (RAM), a static random access memory (SRAM), a dynamic random access memory (DRAM), a synchronous dynamic random access memory (SDRAM), a double data rate SDRAM (DDRSDRAM), an enhanced SDRAM (ESDRAM), a synch link DRAM (SLDRAM), and a direct rambus RAM (DRRAM).

The processor may include one or more processing units; optionally, the processor integrates an application processor and a modem processor, where the application processor primarily handles operations involving an operating system, a user interface, an application program, etc., and the modem processor primarily handles communication signals, such as a baseband processor. It is to be understood that the modem processor described above may also not be integrated into the processor.

An embodiment of the present application further provides a readable storage medium storing a program or instructions. The program or instructions, when executed by a processor, implement the communication method according to at least one of the embodiments of FIG. 1 and FIG. 2, and can achieve the same technical effect, which will not be repeated herein for the sake of brevity.

The processor is a processor in the electronic device described in the above embodiment. The readable storage medium includes a computer-readable storage medium, such as a computer read-only memory (ROM), a random access memory (RAM), a magnetic disk, or a compact disk.

An embodiment of the present application further provides a chip including a processor and a communication interface. The communication interface is coupled with the processor, and the processor is used to run programs or instructions to realize the various processes of the above embodiments of the communication method and may achieve the same technical effect, which will not be repeated herein for the sake of brevity.

It should be understood that the chip referred to in the embodiment of the present application may also be referred to as a system-on-chip, and the like.

It is to be noted that, as used herein, the terms "including," "comprising," or any other variations thereof are intended to cover non-exclusive inclusion, such that a process, method, article, or apparatus including a series of elements includes not only those elements but also other elements that are not expressly listed, or that are inherent to such process, method, article or apparatus. Without further limitation, the fact that an element is defined by the phrase "including a ......" does not preclude the existence of another identical element in the process, method, article, or apparatus that includes that element. In addition, it is to be noted that the scope of the method and apparatus in the implementations of the present application is not limited to performing the functions in the order shown or discussed, but may also include performing the functions in a substantially contemporaneous manner or in reverse order according to the features involved, for example, the described method may be performed in a different order than described, and various steps may be added, omitted, or combined. In addition, features described with reference to some examples may be combined in other examples.

By the above description of the implementation, it is clear to those skilled in the art that the above embodiment methods may be implemented with the aid of software and necessary general hardware platforms, or of course by means of hardware, but in many cases the former is the preferred implementation. Based on this understanding, the technical solutions of the present application, in essence or as a contribution to the prior art, may be embodied in the form of a computer software product. The computer software product is stored in a storage medium, such as an ROM/RAM, a disk and a compact disc, and includes a plurality of instructions to cause a terminal (which may be a mobile phone, a computer, a server, or a network device, or the like) to perform the method described in the various embodiments of the present application.

While the embodiments of the present application have been described above with reference to the accompanying drawings, it is to be understood that the present application is not limited to the above specific implementations, which are merely illustrative rather than restrictive, and that under the inspiration of the present application, those of ordinary skill in the prior art can make various forms without departing from the purpose of the present application and the scope of protection of the claims, and the forms all fall within the protection of the present application.

**Claims**

1. A communication method, performed by a first computing-power unit, comprising:

sending target startup information to a second computing-power unit, the target startup information carrying features of a target task; receiving computing-power measurement information reported by the second computing-power unit, the computing-power measurement information being used for representing available computing power allocated by the second computing-power unit to the target task; and sending, when the available computing power matches the features of the target task, the target task to the second computing-power unit.

2. The method according to claim 1, wherein after sending the target task to the second computing-power unit, the method further comprises: receiving a processing result of the target task sent by the second computing-power unit.

3. The method according to claim 2, wherein after receiving a processing result of the target task sent by the second computing-power unit, the method further comprises:

   sending the processing result of the target task to a third computing-power unit; receiving a target evaluation result fed back by the third computing-power unit, the target evaluation result being obtained by evaluating the processing result of the target task; and updating the processing result of the target task on the basis of the target evaluation result.

4. A communication method, performed by a second computing-power unit, comprising:

   receiving target startup information sent by a first computing-power unit, the target startup information carrying features of a target task; allocating available computing power to the target task on the basis of the features of the target task; and sending computing-power measurement information to the first computing-power unit, the computing-power measurement information being used for representing the available computing power.

5. The method according to claim 4, wherein after sending computing-power measurement information to the first computing-power unit, the method further comprises: receiving the target task, the target task being sent by the first computing-power unit in the event that the available computing power matches the features of the target task.

6. The method according to claim 5, wherein after receiving the target task, the method further comprises:

   executing the target task to obtain a processing result of the target task; and sending the processing result of the target task to the first computing-power unit.

7. A communication method, performed by a third computing-power unit, comprising:

   receiving a processing result of a target task sent by a first computing-power unit; evaluating the processing result of the target task to obtain a target evaluation result; and feeding the target evaluation result back to the first computing-power unit.

8. The method according to any one of claims 1 to 7, wherein the first computing-power unit comprises a first main control board of a first base station, and the second computing-power unit comprises at least one of at least one baseband board of the first base station, at least one baseband board of a second base station, and at least one edge computing device connected to the first base station.

9. The method according to claim 8, wherein in the event that the second computing-power unit comprises at least one baseband board of the second base station, the first base station establishes an inter-base station connection with the second base station via an Xn port; and in the event that the second computing-power unit comprises at least one baseband board of the first base station, the first computing-power unit is connected to the second computing-power unit via a virtual extensible local area network VXLAN.

10. The method according to claim 3 or 7, wherein the third computing-power unit comprises at least one of at least one baseband board of a first base station, at least one baseband board of a second base station, and at least one edge computing device connected to the first base station; and the third computing-power unit is not the same computing-power unit as the second computing-power unit.

11. The method according to any one of claims 1 to 7, wherein the target task comprises: a task of training a model; the processing result of the target task comprises: a model obtained by training; and the target evaluation result comprises: an evaluation result obtained by evaluating the model.

12. An electronic device, comprising a processor, a memory, and a program or instructions stored on the memory and able to run on the processor, wherein the program or instructions, when executed by the processor, implement steps of the communication method according to any one of claims 1 to 11.

13. A readable storage medium, storing a program or instructions, wherein the program or instructions, when executed by a processor, implement steps of the communication method according to any one of claims 1 to 11.

S101

Send target startup information to a second computing-power unit, the target startup information carrying features of a target task

S102

Receive computing-power measurement information reported by the second computing-power unit, the computing-power measurement information beings used for representing available computing power allocated by the second computing-power unit to the target task

S103

Send, when the available computing power matches the features of the target task, the target task to the second computing-power unit

FIG. 1

Main AI training and inference engine

vxlan

vxlan

vxlan

Auxiliary AI training and inference engine

Auxiliary AI training and inference engine

...

Auxiliary AI training and inference engine

FIG. 2

AI training and inference engine

Task Management

Model Management

AI training and inference framework

Computing power management

FIG. 3

gNB

Main control board

Main AI training and inference engine

Baseband board

Auxiliary AI training and inference engine

Baseband board

Auxiliary AI training and inference engine

...

Baseband board

Auxiliary AI training and inference engine

FIG. 4

gNB

Main AI training and inference engine

gNB

Auxiliary AI training and inference engine

gNB

Auxiliary AI training and inference engine

...

gNB

Auxiliary AI training and inference engine

FIG. 5

**gNB**

Main AI training and inference engine

**gNB**

Auxiliary AI training and inference engine

**gNB**

Auxiliary AI training and inference engine

...

**MEC**

Auxiliary AI training and inference engine

FIG. 6

AMF/UPF AMF/UPF

5GC

NG NG

NG NG

NG NG

NG NG

Xn

gNB gNB

Xn Xn

Xn

ng-eNB ng-eNB

NG-RAN

FIG. 7

S201

Receive target startup information sent by a first computing-power unit

S202

Allocate available computing power to a target task on the basis of features of the target task

S203

Send computing-power measurement information to the first computing-power unit

FIG. 8

| Main control board | Baseband board | ... | Baseband board |
|---|---|---|---|
| Main AI training and inference engine | Auxiliary AI training and inference engine | | Auxiliary AI training and inference engine |

001-Send target startup information

001-Send target startup information

002-Report computing-power measurement information

002-Report computing-power measurement information

003-Match a task with computing power

004-Deliver a task

004-Deliver a task

005-Collect and pre-process local data

005-Collect and pre-process local data

005-Collect and pre-process local data

006-Execute the task locally

006-Execute the task locally

006-Execute the task locally

007-Report a task execution result

007-Report a task execution result

FIG. 9

S301

Receive a processing result of a target task sent by a first computing-power unit

S302

Evaluate the processing result of the target task to obtain a target evaluation result

S303

Feed the target evaluation result back to the first computing-power unit

FIG. 10

| gNB<br><br>Main AI training and inference engine | gNB<br><br>Auxiliary AI training and inference engine | ... | gNB<br><br>Auxiliary AI training and inference engine |

402-Request a model/inference result

401-Use, by an upper-layer application, an AI model/inference result

403-Update the model/inference result

405-Application feedback of the AI model inference result

404-Apply the AI model inference result

FIG. 11

500

510

First sending module

520

First receiving module

530

Second sending module

FIG. 12

600

610

Second receiving module

620

Allocation module

630

Fourth sending module

FIG. 13

700

710

Third receiving module

720

Evaluation module

730

Fifth sending module

FIG. 14

800

Electronic device

801

Processor

802

Memory

FIG. 15

## INTERNATIONAL SEARCH REPORT

| International application No. |
| --- |
| **PCT/CN2023/109115** |

**A. CLASSIFICATION OF SUBJECT MATTER**

H04W 28/08(2023.01)i

According to International Patent Classification (IPC) or to both national classification and IPC

**B. FIELDS SEARCHED**

Minimum documentation searched (classification system followed by classification symbols)

IPC: H04W

Documentation searched other than minimum documentation to the extent that such documents are included in the fields searched

Electronic data base consulted during the international search (name of data base and, where practicable, search terms used)

CNTXT, ENTXTC, WPABSC, DPWI: 结果, 算力, 分配, 指派, 资源, 反馈, result, computing power, allocation, assignment, resources, feedback

**C. DOCUMENTS CONSIDERED TO BE RELEVANT**

| Category* | Citation of document, with indication, where appropriate, of the relevant passages | Relevant to claim No. |
| --- | --- | --- |
| X | WO 2022143748 A1 (VIVO MOBILE COMMUNICATION CO., LTD.) 07 July 2022 (2022-07-07)<br>description, page 9, seventh-to-last line to page 25, third-to-last line | 1-6, 8-13 |
| Y | WO 2022143748 A1 (VIVO MOBILE COMMUNICATION CO., LTD.) 07 July 2022 (2022-07-07)<br>description, page 9, seventh-to-last line to page 25, third-to-last line | 7 |
| Y | WO 2022028418 A1 (RESEARCH INSTITUTE OF CHINA MOBILE COMMUNICATIONS CORPORATION et al.) 10 February 2022 (2022-02-10)<br>description, page 10, third-to-last line to page 13, line 21 | 7 |
| X | WO 2022143744 A1 (VIVO MOBILE COMMUNICATION CO., LTD.) 07 July 2022 (2022-07-07)<br>description, page 6, fourth-to-last line to page 24, line 13 | 1-6, 8-13 |
| A | CN 114168331 A (HANGZHOU EZVIZ SOFTWARE CO., LTD.) 11 March 2022 (2022-03-11)<br>entire document | 1-13 |

☑ Further documents are listed in the continuation of Box C.  ☑ See patent family annex.

| | |
| --- | --- |
| \* Special categories of cited documents:<br>"A" document defining the general state of the art which is not considered to be of particular relevance<br>"D" document cited by the applicant in the international application<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
| --- | --- |
| **13 October 2023** | **19 October 2023** |

| Name and mailing address of the ISA/CN | Authorized officer |
| --- | --- |
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**

International application No.

**PCT/CN2023/109115**

| C. | DOCUMENTS CONSIDERED TO BE RELEVANT | |
|---|---|---|
| Category* | Citation of document, with indication, where appropriate, of the relevant passages | Relevant to claim No. |
| A | CN 115373836 A (HUAWEI TECHNOLOGIES CO., LTD.) 22 November 2022 (2022-11-22) entire document | 1-13 |
| A | WO 2021208914 A1 (SPREADTRUM SEMICONDUCTOR (NANJING) CO., LTD.) 21 October 2021 (2021-10-21) entire document | 1-13 |

Form PCT/ISA/210 (second sheet) (July 2022)

## INTERNATIONAL SEARCH REPORT
### Information on patent family members

International application No.

**PCT/CN2023/109115**

| Patent document cited in search report | | | Publication date (day/month/year) | Patent family member(s) | | | Publication date (day/month/year) |
|---|---|---|---|---|---|---|---|
| WO | 2022143748 | A1 | 07 July 2022 | CN | 114691349 | A | 01 July 2022 |
| WO | 2022028418 | A1 | 10 February 2022 | CN | 114095579 | A | 25 February 2022 |
| WO | 2022143744 | A1 | 07 July 2022 | CN | 114691351 | A | 01 July 2022 |
| CN | 114168331 | A | 11 March 2022 | WO | 2023103817 | A1 | 15 June 2023 |
| CN | 115373836 | A | 22 November 2022 | None | | | |
| WO | 2021208914 | A1 | 21 October 2021 | CN | 113535343 | A | 22 October 2021 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

• CN 202211595595